Europäisches Patentamt

European Patent Office

Office européen des brevets

(19)

(11) Numéro de publication: **0 255 430**
**B1**

(12) # FASCICULE DE BREVET EUROPEEN

(45) Date de publication du fascicule du brevet:
03.05.89

(51) Int. Cl.⁴: **F 23 D 14/54**

(21) Numéro de dépôt: 87401725.4

(22) Date de dépôt: 24.07.87

(54) Buse de coupe sidérurgique à double couronne de chauffe.

(30) Priorité: 30.07.86 FR 8611008

(43) Date de publication de la demande:
03.02.88 Bulletin 88/5

(45) Mention de la délivrance du brevet:
03.05.89 Bulletin 89/18

(84) Etats contractants désignés:
AT BE CH DE ES FR GB GR IT LI LU NL SE

(56) Documents cités:
EP-A- 0 103 651
DE-A- 2 832 323
FR-A- 506 186
FR-A- 949 518
GB-A- 950 991

(73) Titulaire: L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cédex 07 (FR)

(72) Inventeur: Arnout, Michel, 15, rue de la Mare aux Fées,
F-95130 Franconville (FR)
Inventeur: Fonteneau, Patrick, 9, rue Tuleu,
F-95600 Eaubonne (FR)
Inventeur: Lasnier, Didier, 5, Chateau Saint-Sylvère,
F-95000 Cergy (FR)

(74) Mandataire: Jacobson, Claude et al, L'AIR LIQUIDE,
SOCIETE ANONYME POUR L'ETUDE ET
L'EXPLOITATION DES PROCEDES GEORGES
CLAUDE 75, quai d'Orsay, F-75321 Paris Cédex 07 (FR)

## Description

La présente invention concerne une buse de coupe sidérurgique à double couronne de chauffe.

On utilise actuellement, en sidérurgie, des buses de coupe pour l'oxycoupage à chaud des tôles de fortes épaisseurs ou le refendage à froid. Ces buses connues sont en général du type monobloc, en totalité en cuivre. Ces buses sont agencées pour assurer, à l'intérieur, un mélange de gaz de chauffe, les gaz combustibles utilisés le plus couramment à cet effet étant le gaz naturel et le propane.

L'oxycoupage des tôles de fortes épaisseurs à chaud ou à froid nécessite des puissances de chauffe importantes et cette chauffe doit être plus intense à chaud qu'à froid. Pour obtenir des performances d'oxycoupage convenables sur de fortes épaisseurs, il est nécessaire de chauffer efficacement non seulement le dessus de la pièce oxycoupée mais encore le fond de la saignée d'oxycoupage. C'est la raison pour laquelle la technologie la plus couramment utilisée à ce jour, dans la conception des buses de coupe pour fortes épaisseurs, est la double couronne de chauffe. Cette double couronne est constituée par une couronne de chauffe intérieure, proche du jet de coupe, à flamme très carburante, afin d'obtenir un long panache autour du jet de coupe qui, entraîné par ce dernier, pénètre dans la saignée de coupe et aide à la chauffe du fond de cette saignée.

Les deux couronnes de flamme, à savoir la couronne extérieure oxydante et la couronne intérieure carburante, sont obtenues par des rapports de sections adaptés à l'endroit des injecteurs qui sont réalisés dans la buse de découpe.

Compte tenu de la faible puissance spécifique de chauffe des gaz actuellement utilisés (gaz naturel et propane), les débits en gaz combustible et oxygène de chauffe sont très importants (15 à 20 m³/h) et la réalisation pratique des injecteurs par usinage ne présente pas de difficulté particulière. En effet, le diamètre des trous à l'endroit des injecteurs est compris entre 0,6 et 1,2 mm, voire davantage.

On a déjà proposé dans le brevet DE-A-28.32.323 une buse de coupe sidérurgique à double couronne de chauffe, à savoir une couronne de chauffe extérieure oxydante et une couronne de chauffe intérieure carburante entourant le jet de coupe, comprenant un canal de coupe central à oxygène de coupe produisant un jet de coupe et, autour de ce canal de coupe central, deux ensembles de canaux répartis autour de l'axe de la buse, à savoir un premier ensemble de canaux extérieurs produisant la couronne de chauffe extérieure oxydante et un second ensemble de canaux intérieurs produisant la couronne de chauffe intérieure carburante, avec alimentation en mélange combustible à partir d'au moins un conduit d'alimentation en oxygène de chauffe et d'au moins un conduit d'alimentation en gaz combustible. Dans cette proposition les mélanges combustibles sont réalisés dans la partie aval de buse au moyen d'anneaux concentriques alimentés par des dérivations à partir des canaux d'oxygène de chauffe et de gaz combustible. Les anneaux sont fixés par brasage sur la partie aval de buse qui elle-même est généralement fixée par brasage sur la partie amont de buse, de sorte que l'ensemble est indémontable.

L'utilisation d'autres gaz, tels que le crylène qui offre une puissance spécifique de chauffe nettement plus importante, proche de l'acétylène, et nécessite des vitesses de sortie plus grandes que le gaz naturel ou le propane, conduit, en adoptant la même technologie que précédemment et en optimisant les débits de chauffe, à l'obligation de réaliser des trous de diamètre très faible à l'endroit des injecteurs. Ces trous doivent avoir en effet un diamètre de l'ordre de 0,2 à 0,3 mm sur l'arrivée d'oxygène de chauffe à la couronne centrale carburante pour n'apporter à cette dernière qu'une très faible quantité d'oxygène.

Le perçage de trous de diamètres aussi petits dans une pièce de cuivre présente à l'évidence de grandes difficultés. Pour y remédier on a déjà envisagé, pour constituer les injecteurs, la mise en place d'inserts dans des trous préalablement forés de diamètre relativement grand. Toutefois, une telle solution est délicate à mettre en œuvre et onéreuse.

La présente invention vise à remédier à ces inconvénients en procurant une buse de coupe de conception particulièrement simple, facile à usiner et présentant, à l'endroit des injecteurs, des trous de section droite très faible.

A cet effet, cette buse de coupe sidérurgique à double couronne de chauffe, à savoir une couronne de chauffe extérieure oxydante et une couronne de chauffe intérieure carburante entourant le jet de coupe, comprenant un canal de coupe central produisant le jet de coupe et, autour de ce canal de coupe central, deux ensembles de canaux répartis autour de l'axe de la buse, à savoir un premier ensemble de canaux extérieurs produisant la couronne de chauffe extérieure oxydante et un second ensemble de canaux intérieurs produisant la couronne de chauffe intérieure carburante, avec alimentation en mélange combustible à partir des canaux extérieurs et des canaux intérieurs, du genre où ladite buse est réalisée essentiellement en deux parties accolées suivant un plan du joint transversal, avec des moyens de communication entre canaux extérieurs et intérieurs, est caractérisée en ce que la première partie ou partie amont, dite bloc d'injecteurs, incorpore d'une part pour chaque canal extérieur un conduit convergent à l'extrémité amont de chaque canal extérieur, d'autre part pour chaque canal intérieur un injecteur d'alimentation en gaz combustible en amont du débouché d'un conduit de communication entre ledit canal intérieur et ledit canal extérieur.

De la sorte, on fournit aux canaux intérieurs la faible quantité d'oxygène nécessaire pour la couronne de chauffe interne à partir du mélange oxycombustible alimentant les canaux extérieurs.

La buse suivant l'invention offre l'avantage que les injecteurs assurant l'alimentation en oxygène de la couronne de chauffe intérieure peuvent avoir un diamètre relativement grand, du fait que pour faire parvenir une même quantité d'oxygène dans les canaux intérieurs du bloc de coupe, on est obligé de faire passer un volume de mélange oxy-combustible plus important et par ailleurs la pression dans les chambres contenant le mélange oxy-combustible de la couronne extérieure est plus faible que la pression d'alimentation de l'oxygène de chauffe.

Un autre avantage procuré par la buse suivant l'invention en deux parties est que l'on peut réaliser les canaux de chauffe, formés dans le bloc de coupe, avec en sortie des parties convergentes, ce qui permet d'optimiser les vitesses de sortie des gaz tout en préservant des chambres de mélange suffisamment importantes pour garantir une bonne homogénéisation de ses gaz.

On décrira ci-après, à titre d'exemple non limitatif, une forme d'exécution de la présente invention, en référence au dessin annexé sur lequel:

La figure 1 est une vue en coupe axiale, faite suivant la ligne I-I de la figure 3, d'une buse de coupe sidérurgique à double couronne de chauffe suivant l'invention.

La figure 2 est une vue en plan du bloc d'injecteurs de la buse de coupe de la figure 1.

La figure 3 est une vue de dessous du bloc d'injection de la buse de coupe de la figure 1.

La figure 4 est une vue en plan du bloc de coupe de la buse de la figure 1.

La figure 5 est une vue en dessous du bloc de coupe de la buse de coupe de la figure 1.

La figure 6 est une vue en coupe partielle d'une variante d'exécution.

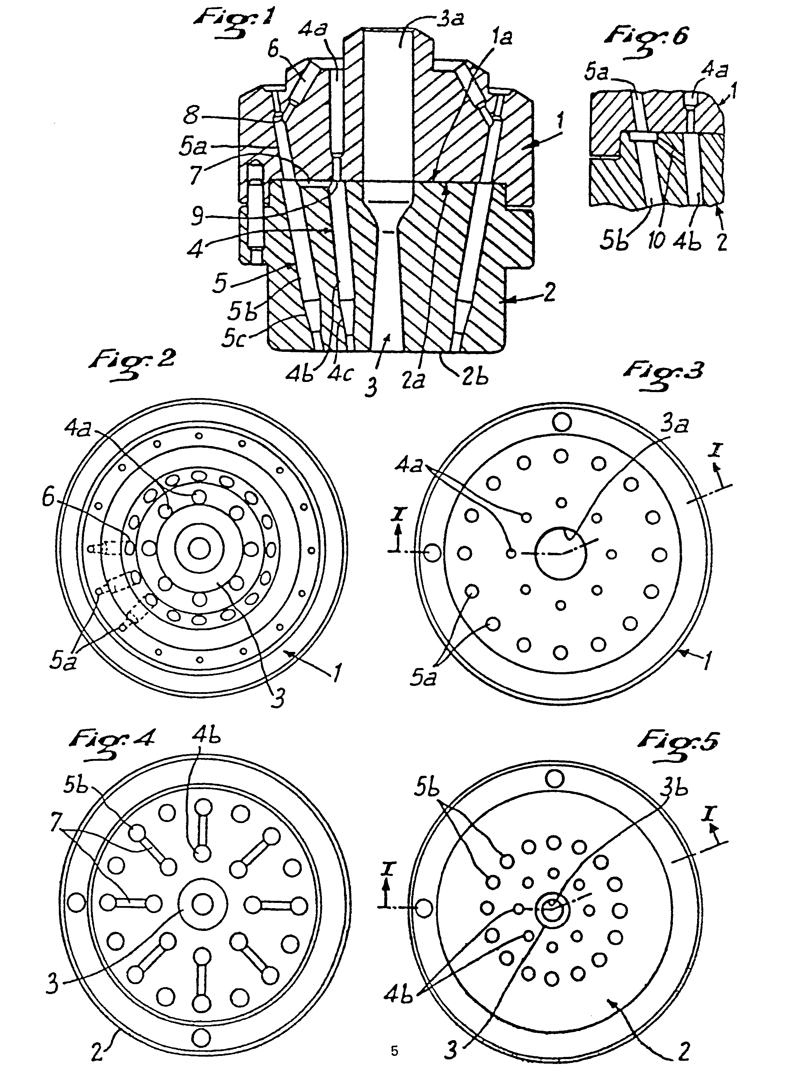

La buse de coupe sidérurgique représentée sur les figures 1 à 5 est constituée en deux parties solidarisées entre elles au moyen de vis ou goupilles, à savoir un bloc d'injecteurs supérieur 1 et un bloc de coupe inférieur 2. Ces deux blocs 1 et 2 ont une forme générale cylindrique et ils sont accolés l'un à l'autre par leurs faces frontales respectives 1a et 2a constituant leur plan de joint.

La buse de coupe présente, dans sa partie centrale, un canal de coupe axiale 3 formé dans les deux blocs 1 et 2. Ce canal de coupe 3 est constitué par un conduit cylindrique 3a percé axialement dans le bloc d'injecteurs 1 et par un conduit convergent-divergent 3b percé axialement dans le bloc de coupe 2, pour constituer une tuyère d'éjection du jet de coupe.

Le canal de coupe 3 est entouré d'un ensemble de canaux intérieurs 4 régulièrement répartis autour de l'axe de la buse et qui sont destinés à produire, à la sortie de la buse, une couronne de chauffe intérieure carburante entourant le jet de coupe. Chaque canal intérieur 4 est constitué par deux conduits 4a et 4b se raccordant l'un à l'autre dans le plan de joint et qui sont percés respectivement dans les deux blocs 1 et 2. Le conduit 4a s'étend longitudinalement dans le bloc d'injecteurs 1 et il débouche, à son extrémité supérieure, dans une chambre d'alimentation en gaz combustible et, à son extrémité inférieure, dans la face frontale inférieure 1a du bloc d'injecteurs 1. Le conduit 4b, qui est percé de part en part dans le bloc de coupe 2, converge en direction de l'axe de la buse et il débouche, à son extrémité supérieure, dans la face frontale 2a du bloc de coupe 2, en regard de l'extrémité du conduit 4a et, à son extrémité inférieure, dans la face frontale inférieure 2b du bloc de coupe 2. Le conduit 4b comprend une partie convergente 4c proche de son orifice de sortie.

La buse de coupe comporte également un second ensemble de canaux extérieurs 5 régulièrement répartis autour de l'axe de buse et qui sont destinés à produire une couronne de chauffe extérieure oxydante autour de la couronne de chauffe intérieure carburante. Les canaux extérieurs sont plus nombreux que les canaux intérieurs et leur nombre est, par exemple, le double de celui des canaux intérieurs, chaque canal extérieur 5 est constitué par deux conduits 5a, 5b percés respectivement de part en part dans les deux blocs 1 et 2. Les deux conduits 5a et 5b sont alignés suivant un même axe et ils forment un canal 5 convergeant vers l'axe de la buse. Le conduit 5a percé dans le bloc d'injecteurs 1 débouche, à son extrémité supérieure, dans une chambre d'alimentation en oxygène de chauffe et, à son extrémité inférieure, dans la face frontale inférieure 1a du bloc. Le conduit 5a communique également, par l'intermédiaire d'un conduit 6, avec la chambre d'alimentation en gaz combustible. Le conduit 5b débouche, à son extrémité supérieure, dans sa face frontale supérieure 2a du bloc de coupe 2 et, à son extrémité inférieure, dans la face frontale inférieure 2b de ce bloc. Ce conduit 5b présente avantageusement une partie convergente 5c proche de son orifice de sortie.

Comme on peut le voir plus particulièrement sur la figure 4, les extrémités supérieures des conduits extérieurs 5b sont alignées radialement avec eux, par l'intermédiaire de rainures radiales 7 qui sont creusées dans la face frontale supérieure 2a du bloc de coupe 2.

Suivant une variante de réalisation représentée sur la figure 6, la communication entre le conduit intérieur 4b et un conduit extérieur 5b pourrait être réalisée au moyen d'un trou oblique 10 percé entre l'orifice supérieur du conduit extérieur 5b et le conduit intérieur 4b.

D'après la description qui précède, on peut voir que le bloc d'injecteurs 1 comprend un ensemble d'injecteurs 8 pour la formation d'un mélange oxy-combustible destiné à créer la couronne de chauffe extérieure. Chaque injecteur 8 se trouve au point de jonction des conduits 5a et 6. Par ailleurs la buse comporte également un ensemble d'injecteurs 9 alimentant la couronne de chauffe intérieure en mélange oxy-combustible. Chaque injecteur 9 est formé à l'extrémité supérieure d'un conduit 4b, à l'endroit où débouche une rainure radiale 7 d'alimentation en mélange oxy-combustible et où se trouve l'orifice inférieur du conduit 4a d'alimentation en combustible.

Par conséquent l'ensemble des canaux inférieurs 4 produit, autour du jet de coupe sortant de la tuyère 3b, une couronne de chauffe inférieure carburante, la faible quantité d'oxygène nécessaire pour la formation de cette couronne étant prélevée, par les rainures 7, à partir du mélange oxy-combustible formé dans les canaux extérieurs 5.

Ces canaux extérieurs produisent à leur tour la couronne de chauffe extérieure oxydante.

Les parties convergentes 4c, 5c des conduits 4b, 5b permettent d'optimiser les vitesses de sortie des gaz tout en préservant des chambres de mélange, constituées par les parties amont de ces conduits 4b, 5b, suffisamment importantes pour garantir une bonne homogénéisation des gaz.

## Revendications

1. Buse de coupe sidérurgique à double couronne de chauffe, à savoir une couronne de chauffe extérieure oxydante et une couronne de chauffe intérieure carburante entourant le jet de coupe, comprenant un canal de coupe central (3) produisant le jet de coupe et, autour de ce canal de coupe central, deux ensembles de canaux répartis autour de l'axe de la buse, à savoir un premier ensemble de canaux extérieurs (5) produisant la couronne de chauffe extérieure oxydante et un second ensemble de canaux intérieurs (4) produisant la couronne de chauffe intérieure carburante, avec l'alimentation en mélange combustible à partir des canaux extérieurs (5) et des canaux intérieurs (4), du genre où ladite buse est réalisée essentiellement en deux parties (1, 2) accordées suivant un plan de joint transversal, avec des moyens de communication (7) entre canaux extérieurs et intérieurs (4), caractérisée en ce que la première partie ou partie amont (1), dite bloc d'injecteurs, incorpore d'une part pour chaque canal extérieur (5a) un conduit (6) convergeant à l'extrémité amont de chaque canal extérieur (5), d'autre part pour chaque canal intérieur (4a) un injecteur d'alimentation en gaz combustible (9), en amont du débouché d'un conduit de communication (7) entre ledit canal intérieur (4a) et ledit canal extérieur (5).

2. Buse de coupe sidérurgique suivant la revendication 1, caractérisée en ce que les conduits intérieurs (4b) et extérieurs (5b) ménagés dans la seconde partie (2), dite bloc de coupe, présentent chacun une partie convergente (4c, 5c) proche de l'orifice de sortie.

## Patentansprüche

1. Schneiddüse für die Eisenhüttenindustrie, mit doppeltem Heizkranz, und zwar einem äusseren, oxidierenden Heizkranz und einem den Schneidstrahl umgebenden kohlenwasserstoffhaltigen inneren Heizkranz, ferner mit einem zentralen, den Schneidstrahl erzeugenden Schneidkanal (3) und zwei den zentralen Schneidkanal umgebenden, um die Düsenachse verteilten Gruppen von Kanälen, und zwar einer ersten Gruppe von äusseren Kanälen (5), die den äusseren, oxidierenden Heizkranz erzeugen, und einer zweiten Gruppe von inneren Kanälen (4), die den kohlenwasserstoffhaltigen inneren Heizkranz erzeugen, mit Zuführung von brennbare, Gemisch aus den äusseren Kanälen (5) und den inneren Kanälen (4), wobei die Düse im wesentlichen aus zwei, in einer querstehenden Trennebene aneinandergefügten Teilen (1, 2) besteht und verbindende Mittel (7) zwischen den äusseren und den inneren Kanälen (4) vorgesehen sind, dadurch gekennzeichnet, dass der erste oder stromauf liegende, als Injektorblock bezeichnete Teil (1) einerseits für jeden äusseren Kanal (5a) eine Leitung (6) aufweist, die zu dem stromauf liegenden Ende jedes äusseren Kanals (5) hin konvergiert, und andererseits für jeden inneren Kanal (4a) einen Injektor (9) Zuführung von Brenngas stromauf von dem Austritt einer Verbindungsleitung (7) zwischen dem besagten inneren Kanal (4a) und dem besagten äusseren Kanal (5).

2. Schneiddüse für die Eisenhüttenindustrie, nach Anspruch 1, dadurch gekennzeichnet, dass die in dem als Schneidblock bezeichneten zweiten Teil (2) vorgesehenen inneren und äusseren Leitungen (4b und 5b) jeweils einen konvergierenden Abschnitt (4c, 5c) in der Nähe der Austrittsöffnung aufweisen.

## Claims

1. Steelworks cutting nozzle with a double heating ring, namely an outer oxidizing heating ring and a inner carburizing ring surrounding the cutting jet, comprising a central cutting channel (3) producing the cutting jet and, around the central cutting channel, two sets of channels distributed around the axis of the nozzle, namely a first set of outer channels (5) producing an outer oxidizing cutting ring and a second set of interior channels (4) producing the inner carburizing heating ring, with the supply of a combustible mixture from the outer channels (5) and the inner channels (4), of the type wherein the said nozzle is constructed essentially in two parts (1, 2) joined on a transverse joint plane with means (7) of communication between outer and inner channels (4), characterised in that the first or upstream part (1), referred to as an injector block, incorporates on the one hand for each outer channel (5a) a conduit (6) coverging towards the upstream end of each outer channel (5) and on the other hand for each inner channel (4a) an injector (9) for supplying combustible gas, upstream of the opening of a communicating conduit (7) between the said inner channel (4a) and the said outer channel (5).

2. Steelworks cutting nozzle according to claim 1, characterised in that the inner (4b) and outer (5b) conduits arranged in the second part (2), referred to as the cutting block, each have a converging part (4c, 5c) near the outer orifice.

Fig. 1

Fig. 6

Fig. 2

Fig. 3

Fig. 4

Fig. 5